Europäisches Patentamt

European Patent Office

Office européen des brevets

(11) Publication number: **0 284 171**
**A2**

## EUROPEAN PATENT APPLICATION

(21) Application number: **88200579.6**

(22) Date of filing: **25.03.88**

(51) Int. Cl.4: **C08F 251/02** , **D06M 14/04** , **C08L 27/06**

(30) Priority: **26.03.87 GB 8707319**

(43) Date of publication of application:
**28.09.88 Bulletin 88/39**

(84) Designated Contracting States:
**BE DE ES FR GB IT NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Coleman-Kammula, Seetha**
**Badhuisweg 3**
**NL-1031 CM Amsterdam(NL)**
Inventor: **van Deursen, Josephus Hubertus**
**Badhuisweg 3**
**NL-1031 CM Amsterdam(NL)**

(74) Representative: **Aalbers, Onno et al**
**P.O. Box 302**
**NL-2501 CH The Hague(NL)**

(54) **Process for the preparation of fibre-reinforced polyvinyl chloride composites.**

(57) A process for the preparation of reinforced polyvinyl chloride (PVC) composites containing PVC-grafted cellulose fibre material as reinforcing component, which comprises:

Step A - grafting vinyl chloride onto a cellulose fibre material by polymerization in an aqueous medium in the presence of a polymerization initiator based on a metal which complexes to hydroxyl and/or 1,2-dihydroxy groups, thus providing a reaction product which is essentially a mixture of PVC-grafted cellulose fibre material and PVC homopolymer,

Step B - isolating the reaction product from the aqueous medium as under Step A, and

Step C - employing the isolated reaction product as under Step B to prepare a composite via a thermal moulding process.

EP 0 284 171 A2

# PROCESS FOR THE PREPARATION OF FIBRE-REINFORCED POLYVINYL CHLORIDE COMPOSITES

The invention relates to a process for the preparation of reinforced polyvinyl chloride (PVC) composites containing PCV-grafted cellulose fibre material as reinforcing component.

The technique to incorporate fibrés into a polymer matrix in the preparation of fibre-reinforced composites, is well known. The performance of such composites is not only related to the nature and the amount of fibres employed in the preparation of the composites, but also governed by the degree of fibre dispersion in the polymer matrix. The fibre dispersion can often be enhanced by submitting the fibres to a pretreatment.

In French Patent Application, publication number 2370766 a process for fibre pretreatment is disclosed wherein a cellulosic fibrous material is treated with an olefinically unsaturated monomer in the presence of a peroxy type initiator, a so-called grafting process. In example 12 of said application, wherein a lignocellulose is grafted with styrene monomer in the presence of t-butyl hydroperoxide, the dried reaction product of the grafting reaction is subsequently used for the preparation of test specimens via a moulding process at elevated temperature. As vinyl chloride is stated to be a suitable olefinically unsaturated monomer for the process as disclosed in the application mentioned hereinbefore, it could be expected for said process to be also suitable for the production of PVC-grafted cellulose fibres, even though no experimental data concerning the use of vinyl chloride is given. However all attempts by the applicant to prepare PVC-grafted cellulose according to the process described hereinbefore employing vinyl chloride as olefinically unsaturated monomer in combination with different peroxy type initiators, failed. In virtually all the experiments the grafting percentage obtained was zero. Hence said process does not solve the problem of how to prepare reinforced PVC composites containing PVC-grafted cellulose fibres as the reinforcing component.

Therefore the problem underlying the present invention in finding a method which will make it possible to prepare reinforced PVC composites containing a PVC-grafted cellulose as the reinforcing component.

Tappi, July 1962, Vol 45, No 7, p 145-150, deals with the upgrading of the performance of certain cellulosic materials, ie. bleached kraft pulp for paper making, which comprises treating said pulp with vinyl chloride and ceric ammonium nitrate in an aqueous medium and isolating the grafted cellulose from the reaction product, said reaction product being a mixture of PVC-grafted cellulose, generally present in a content of up to 30% by weight, and co-produced PVC homopolymer generally present in a content of at least 70% by weight. The yield of grafted cellulose obtained, was considered to be too low for use in paper making.

Surprisingly, it has now been found that the grafting procedure described hereinbefore which did not prove to be successful in upgrading the performance of cellulose for paper making, is eminently suited to provide grafted cellulose for the production of reinforced PVC composites containing grafted cellulose as the reinforcing component.

The invention, therefore, provides a process for the preparation of reinforced PVC composites, containing PVC-grafted cellulose fibre material as reinforcing component, which process comprises the following steps:

Step A - grafting vinyl chloride onto a cellulose fibre material, by polymerization in an aqueous medium in the presence of a polymerization initiator based on a metal which complexes to hydroxyl and/or 1,2-dihydroxy groups thus providing a reaction product which is essentially a mixture of PVC-grafted cellulose fibre material and PVC homopolymer,

Step B - isolating the reaction product from the aqueous medium as under Step A, and

Step C - employing the isolated reaction product as under Step B to prepare said reinforced PVC composite via a thermal moulding process.

As mentioned hereinbefore the performance of reinforced polymer composites is closely related to the degree of dispersion of the reinforcing component in the polymer matrix. In general despersion of the reinforcing component will not only require a separate process step, but moreover conditions such as high temperature and/or high shear, which may sometimes result in a certain degree of degradation of the polymer or the reinforcing component, reduction of the fibre length. Hence a process for the preparation of reinforced polymer composites which does not require such a dispersion step would be a great improvement. The process of the present invention offers such an improvement, as the precursor of the reinforcing component, ie. the cellulose fibre material, and the precursor of the polymer matrix, ie. vinyl chloride are contacted when the viscosity in the reactor is still relatively low, thus intimate mixing can be achieved in situ without degradation occurring. During the subsequent grafting/polymerization reaction a slurry is produced containing an intimate mixture of PVC homopolymer and PVC-grafted cellulose fibre material, ie. a PVC homopolymer wherein the reinforcing component is present in a high degree of dispersion.

The process according to the present invention has a further advantage in that in the preparation of the PVC-grafted cellulose fibre material it is possible, by adjusting one or more process parameters, to vary more or less independently the add-on percentage of the cellulose, ie. the percentage weight increase of the cellulose as a result of PVC grafting, as well as the PVC homopolymer content in the reaction product. The process thus offers the possibility of producing mixtures of PVC homopolymers and PVC-grafted cellulose of widely differing compositions while maintaining the high standards of the dispersion of the reinforcing component.

The cellulose fibre material which may be used in the preparation of the reinforcing component in the process of the present invention may originate from widely different sources and includes for example, cellulose fibres from hard wood, soft wood, cotton linters and flax.

The fibre dimensions are not critical but in order to achieve the highest degree of reinforcement there is a preference for long fibres, eg. 2 mm and longer.

The cellulose fibre material and vinyl chloride will generally be used in a weight ratio in the range of from 5-95 to 55-45 w/w.

The metal-based polymerization initiators which may conveniently be employed in the process of the present invention are those wherein the or at least a metal has hydroxyl and/or 1,2-dihydroxy group complexing properties. Such metal compounds are known e.g. from The Chemistry and Technology of Cellulosic Copolymers, by A. Hebeish and J.T. Guthrie, Springer Verlag, 1981 and include cerium-, cobalt-, manganese-and vanadium-based compounds. Cerium-based polymerization initiators are preferred and include cerium ammonium nitrate and cerium ammonium sulphate. Cerium ammonium nitrate is a preferred cerium-based polymerization initiator.

The metal-based polymerization initiators mentioned hereinbefore will generally be employed in an amount in the range of from $1.7 \times 10^{-5}$ to $1.25 \times 10^{-2}$ mol of metal having complexing properties, per gram of cellulose material and preferably in the range of from $3.4 \times 10^{-5}$ to $2 \times 10^{-4}$ mol per gram of cellulose material.

The grafting of the cellulose material will generally be carried out at a temperature in the range of from 20 to 70 °C. Preferably the reaction is conducted at a temperature in the range of from 30 to 50 °C.

The grafting reaction may be carried out by introducing all the reactants e.g. the cellulose fibre material, vinyl chloride and the initiator in the reactor before commencing the reaction. Alternatively only a part of the vinyl chloride and/or the initiator is introduced before commencing the polymerization, while the residual amount(s) is (or are) added in one or more additions during the polymerization. Which mode of addition is employed may amongst others be determined by the composition of the reaction product required. The add-on percentage appears to be affected by the cellulose-vinyl chloride ratio, by the mode of initiator and vinyl chloride addition and the reaction time while the PVC homopolymer content appears to be primarily governed by reaction time and to a lesser extent by the ratio of cellulose and vinyl chloride. The highest add-on percentages appear to be obtained with a multiple vinyl chloride addition combined with a more or less continuous addition of a part of the initiator during the polymerization.

The percentage add-on which may be obtained during the grafting reaction in the process of the present invention may vary from less than 5 to more than 150 %w. Preferably the percentage add-on is in the range from 20 to 55 %w.

At the end of the grafting reaction the unreacted vinyl chloride is flashed off and the polymeric reaction product may be isolated from the aqueous slurry e.g. by filtration over a sieve or deposition on preformed screen at atmospheric or sub-atmospheric pressure. After washing with water and/or an alcohol such as ethyl alcohol, the filter cake obtained may be dried and used for the preparation of the reinforced PVC composites as mentioned hereinbefore.

Prior to drying, the filter cake may be pressed under one or more rollers, and after drying the obtained sheet may be introduced into a mould and compression moulded in one or more steps at elevated temperature. Alternatively the dried filter cake may be introduced into e.g. an extruder and the composite may subsequently be produced via compression or injection moulding.

Should the composition of the reaction product be deficient in PVC homopolymer then this deficiency can be remedied by the addition of separately prepared PVC homopolymer, eg. by mixing PVC homopolymer powder into the vinyl chloride-free aqueous slurry obtained at the end of the cellulose grafting reaction step, or by dry-blending with the reaction product. Alternatively it is also possible to employ eg. a grafted cellulose-rich reaction product as a grafted cellulose masterbatch and disperse said masterbatch into the required amount of PVC homopolymer or another type of suitable polymer matrix, which dispersion may conveniently be conducted on a two-roller mill.

The process of the present invention should not be interpreted to be restricted to the preparation of reinforced composites based on rigid PVC, as the preparation of reinforced PVC composites based on flexible PVC is also considered to be part of the invention. Such flexible PVC composites may conveniently be obtained by dispersing the isolated reaction product of the grafting reaction into a suitable plasticizer, to provide composites wherein the plasticizer to PVC weight ratio is in the range of from 30:100 to 80:100 w/w.

As both or at least a considerable part of reinforcing component in the composite as well as the polymer matrix are based on PVC, the composite will almost certainly require the presence of at least a stabilizer for PVC, for which any conventional PVC-stabilizer or stabilizer system may be employed. PVC-stabilizers are known from the technical literature such as "Encyclopedia of PVC" Vol. 1, published by Marcel Dekker, New York 1976.

The incorporation of the stabilizer may conveniently be effected by dissolving the stabilizing compound or compounds in a solvent which has good wetting properties for PVC, e.g. isooctane, and mixing the obtained solution with the reaction product and subsequently evaporating the solvent. The stage at which the stabilizing compound(s) is (or are) incorporated is not critical, and may conveniently be carried out before or after isolating the reaction product from the reaction medium.

The composition of the composites may optionally include additives such as for example, processing aids, release agents as well as pigments, fillers and dyes. Such components may be added at any convenient stage during the process according to the present invention.

The invention will be further illustrated by the following examples for which the following information is provided:

a) <u>Abreviations Used</u>: CAN : cerium ammonium nitrate
VC : vinyl chloride
DOP : dioctyl phthalate
ESO : epoxidized soyabean oil

b) <u>Cellulose Types</u>: A : defluffed paperpulp
B : eucalyptus
C : cotton linters
D : whatman

c) <u>Procedure for analyzing "grafted" cellulose</u>:

A weighed sample of dried reaction product is extracted with tetrahydrofuran (THF) in a Soxhlet apparatus for 20 h, resulting in a THF-soluble fraction being PVC homopolymer and a THF-insoluble fraction being PVC-grafted cellulose. Both fractions are dried and weighed.

d) <u>Procedure for calculating the composition of the "grafted" cellulose</u>: Definitions used:
M :weight of vinyl chloride introduced into the reactor
W :weight of cellulose
$G_c$:weight of THF-insoluble fraction (PVC-grafted cellulose)
h :weight of THF-soluble fraction (PVC homopolymer)
G :weight of grafted PVC, = $(G_c-W)$

Percentage VC conversion = $\dfrac{G + h}{M} \times 100\%$

Percentage VC conversion Add-on = $\dfrac{G}{W} \times 100\%$

Percentage VC conversion Efficiency = $\dfrac{G}{G + h} \times 100\%$

e) <u>Additives used</u>: Epoxidized soyabean oil, Edenol D 81 (trade name) ex Henkel.
Mark LC 299: Ba/Cd stabilizer ex Lancro Chemicals.

Example I

Preparation of PVC-grafted cellulose via a batch process, wherein all the reactants are present in the reactor before the reaction commences.

The preparation of the PVC-grafted cellulose was conducted in a 9 1 stainless steel autoclave, containing 7 1 of demineralized water. The cellulose was dispersed in the water and the obtained slurry was deaerated. Next a solution of ceric ammonium nitrate in nitric acid and vinyl chloride were introduced into the reactor. Under moderate stirring the reactor contents were heated to and maintained at the temperature for a length of time as indicated in Table 1 hereinafter. Table 1 furthermore shows the quantities of the reactants used in each of the experiments. Subsequently the unreacted vinyl chloride was flashed off and the reaction product was isolated by draining, washed with water and ethanol, dried and analysed to provide the product data as given in Table 1.

Example II

Preparation of PVC-grafted cellulose via a batch process wherein the vinyl chloride and the initiator solution were introduced via a staged addition

The preparation of PVC-grafted cellulose as in Example I was repeated with the exception that only a part of the vinyl chloride and the initiator had been introduced into the reactor before starting the reaction while the remainder of these reactants were introduced during the reaction via a staged addition. The compositions of the reaction products thus obtained are given in Table 2 together with the corresponding process data.

Example III

Preparation of reinforced rigid PVC composites

Reinforced PVC composites were prepared employing reaction products as prepared according to Examples I and II. The powdered reaction products were treated with a 2 %w solution of Irgastab MOK-17 (trade name) in isooctane in an amount sufficient to provide a composition which contained 1.5 %w stabilizer on reaction product. Subsequently the isooctane was removed by evaporation at 20 °C under sub-atmospheric pressure. The stabilized reaction product was dispersed in excess (about a hundred fold) water, and when required sufficient PVC powder CARINA S 60-12 trade name) was stirred into the slurry to obtain a composite with the desired cellulose content. The dispersed particles were isolated from the aqueous slurry by depositing the slurry on a dewatering screen to achieve fast draining of the water. The resulting water-containing sheets were compressed while still on the screen with e.g. a metal roller to remove more water. Subsequently the sheets were removed from the screen and dried in air at ambient temperature (about 20 °C) under sub-atmospheric pressure. The dried sheets were subsequently transferred to a flat 2 mm mould and heated to 180 °C under a pressure of 20 bar. Upon reaching 180 °C heating was continued for 1 min under a pressure of 200 bar. The resulting composites were used to prepare test samples for testing a number of mechanical properties following the NEN 7105 (September 1981) test method. Comparative test specimens were prepared based on non-reinforced PVC-composites employing CARINA S 60-12. The mechanical properties together with the corresponding composite compositions are given in Table 3.

Example IV

Preparation of flexible reinforced PVC composites

The reaction product as prepared according to experiment 8 was dispersed in dioctyl phthalate and mixed, when required with PVC-powder CARINA S 70-16 (trade name) together with three additives in the ratios as indicated in Table 4 hereinafter. The mixtures were subsequently gelated and homogenized on a two-roller mill at 160 °C for 5 minutes. The sheets were pressed into 2 mm thick composites following the same procedure as mentioned in Example III hereinbefore. The tensile modulus of the thus obtained flexible composites was measured according to B.S. 2782 Part III 1970, method 301 E. The results obtained and the corresponding composite compositions are given in Table 4 hereinafter together with those of a non-reinforced flexible PVC composite.

## Table 1

| Exp. | Cellulose g | | CAN * (100%) g | VC g | Temp. °C | Time Min. | Product g | VC Conversion % | Add-On % | Efficiency % |
|---|---|---|---|---|---|---|---|---|---|---|
| 1 | 62.5 | (A) | 2.3 | 190 | 40 | 19 | 90.6 | 15 | 24 | 54 |
| 2 | 62.5 | " | 2.3 | 190 | 40 | 33 | 137 | 40 | 38 | 32 |
| 3 | 62.5 | " | 2.3 | 190 | 40 | 48 | 157 | 50 | 40 | 28 |
| 4 | 62.5 | " | 2.3 | 190 | 40 | 150 | 175 | 69 | 55 | 26 |
| 5 | 62.5 | " | 2.3 | 290 | 40 | 150 | 294 | 80 | 69 | 19 |
| 6 | 62.5 | " | 2.3 | 570 | 40 | 150 | 310 | 43 | 67 | 17 |
| 7 | 62.5 | " | 6.9 | 570 | 40 | 260 | 214 | 26 | 57 | 24 |
| 8 | 50 | (B) | 1.8 | 150 | 40 | 630 | 136 | 57 | 49 | 31 |
| 9 | 50 | (C) | 1.8 | 150 | 40 | 660 | 124 | 50 | 47 | 31 |
| 10 | 50 | (C) | 1.8 | 150 | 40 | 900 | 136 | 57 | 54 | 38 |
| 11 | 50 | (D) | 1.8 | 150 | 40 | 900 | 105 | 37 | 25 | 23 |
| 12 | 62.5 | " | 2.3 | 190 | 31 | 150 | 156 | 50 | 25 | 16 |
| 13 | 125 | " | 2.3 | 350 | 31 | 150 | 385 | 79 | 47 | 22 |
| 14 | 62.5 | " | 2.3 | 190 | 31 | 70 | 124 | 32 | 33 | 24 |
| 15 | 500 | " | 9.2 | 150 | 31 | 150 | 1625 | 86 | 67 | 30 |

* dissolved in 45 ml 1 N nitic acid.

## Table 2

| Exp | Cellulose | CAN (100%) | | | | VC | | |
| | g | In Reactor g | Added g | Mode of Addition | In Reactor g | Added g | Mode of Addition |
|---|---|---|---|---|---|---|---|
| 16 | 62.5 (A) | 2.3 | 4.6 | 2x2.3g** | 190 | 380 | 2x190g** |
| 17 | 125 " | 2.3 | 4.6 | 2x2.3g** | 350 | 700 | 2x350g** |
| 18 | 62.5 " | 2.3 | 4.6 | C* | 190 | 380 | 2x190g** |
| 19 | 62.5 " | 2.3 | 4.6 | C* | 190 | 380 | 2x190g** |

C*  Continuous addition

**  indicates two additions of

| Exp | Temp °C | Time Min. | Product g | VC Conversion % | Add-On % | Efficiency % |
|---|---|---|---|---|---|---|
| 16 | 40 | 120 | 509 | 88 | 112 | 16 |
| 17 | 40 | 139 | 1030 | 86 | 114 | 16 |
| 18 | 40 | 150 | 525 | 81 | 134 | 18 |
| 19 | 40 | 240 | 555 | 86 | 130 | 17 |

0 284 171

Table 3

| Exp | Reaction Product (Stabilized) | | PVC Powder | Cellulose Content | Add-On | Flexural Modulus | Tensile Modulus |
|---|---|---|---|---|---|---|---|
| | From Exp | g | g | .% | % | GPa | GPa |
| 20 | 9 | 15 | — | 38 | 47 | — | 7.6 |
| 21 | 9 | 15 | 4 | 30 | 47 | — | 6.8 |
| 22 | 9 | 15 | .23 | 15 | 47 | — | 4.9 |
| 23 | 11 | x* | — | 48 | 25 | — | 7.7 |
| 24 | 12 | x* | — | 40 | 25 | 7.4 | 7.0 |
| 25 | 13 | x* | — | 32 | 47 | 7.5 | 6.3 |
| 26 | 14 | x* | — | 50 | 33 | 9.4 | 8.5 |
| 27 | 16 | x* | — | 31 | 67 | 5.8 | 6.5 |
| 28 | 17 | x* | — | 12 | 114 | 4.7 | 4.5 |
| Comparative - Experiment | — | — | x* | — | — | 3.2 | 2.3 |

\* Indicates that amount of material used is not
important as no other component was added.

Table 4

| Exp | Reaction Product | | DOP | PVC Powder | ESO | LC 299 | Stearic Acid | Cellulose Content | Tensile Modulus |
|---|---|---|---|---|---|---|---|---|---|
| | Form Exp | g | g | g | g | g | g | % | GPa |
| 29 | 8 | 26.1 | 65 | 84.1 | 1.98 | 1.98 | 0.33 | 6.2 | 41.8 |
| 30 | 8 | 52.6 | 65 | 68.0 | 1.98 | 1.98 | 0.33 | 12.5 | 32.2 |
| Comparative Experiment | - | - | 65 | 100 | 1.98 | 1.98 | 0.33 | - | 14.5 |

## Claims

1. A process for the preparation of reinforced polyvinyl chloride (PVC) composites, containing PVC-grafted cellulose fibre material as reinforcing component, which process comprises the following steps:

Step A - grafting vinyl chloride onto a cellulose fibre material, by polymerization in an aqueous medium in the presence of a polymerization initiator based on a metal which complexes to hydroxyl and/or 1,2-dihydroxy groups, thus providing a reaction product which is essentially a mixture of PVC-grafted cellulose fibre material and PVC homopolymer,

Step B - isolating the reaction product from the aqueous medium as under Step A, and

Step C - employing the isolated reaction product as under Step B to prepare said reinforced PVC composite via a thermal moulding process.

2. A process as claimed in Claim 1, wherein the polymerization initiator is employed in a ratio in the range of from $1.7 \times 10^{-5}$ to $1.25 \times 10^{-2}$ mol of said metal per gram of cellulose.

3. A process as claimed in claim 1 or 2, wherein said metal is cerium.

4. A process as claimed in any of the preceding claims, wherein a staged addition of the initiator is employed.

5. A process as claimed in Claim 4, wherein a part of the initiator is introduced before starting the polymerization and the remainder is added continuously during the polymerization.

6. A process as claimed in any of the preceding claims wherein a staged addition of the vinyl chloride is employed.

7. A process as claimed in any of the preceding claims wherein the grafting reaction is conducted at a temperature in the range of from 20 to 70 °C.

8. A process as claimed in any of the preceding claims wherein the cellulose fibre material and the vinyl chloride are used in a weight ratio in the range of from 5-95 to 55-45 w/w.

9. A process as claimed in any of the preceding claims, wherein a PVC stabilizer is incorporated in the reaction product of the grafting reaction, before or after isolating the reaction product from the aqueous medium.

10. A process as claimed in any of the preceding claims, wherein separately prepared PVC homopolymer is mixed with the reaction product before or after isolation from the aqueous medium.

11. A process as claimed in any of the preceding claims, wherein the reaction product is mixed with a PVC plasticizer.

12. A process as claimed in claim 11, wherein a weight ratio of plasticizer to PVC in the range of from 30:100 to 80:100 is used.